# EUROPEAN PATENT APPLICATION

(11) **EP 0 870 978 A1**
(43) Date of publication of application: **14.10.1998**
(21) Application number: 96937160.8
(22) Date of filing: 29.10.1996
(51) Int. Cl.: F21V 8/00, G02B 6/10

(54) **A LIGHT CONDUCTING PLATE, METHOD FOR MAKING THE SAME AND USING THEREOF**

(30) Priority: 30.10.1995 CN 95112747
(71) Applicant: Li, Changgu, Nanjing 210012 (CN)
(72) Inventor: Li, Changgu, Nanjing 210012 (CN)
(74) Representative: Matthews, Derek Peter
(86) International application number: CN9600095
(87) International publication number: WO9716755

(57) **Abstract**

A light conducting plate is comprised of at least three layers, in which the middle layer for conducting light is of polystyrene, and the upper layer and down layer for reflecting light is of poly methyl mehtylacrylate or Al film . A opaque layer may be also coated on the outer surface of said reflecting layers respectively, thereby a light conducting plate having more than three layers is provided. Said opaque layer can be of resin coating or film. The light conducting plate of present invention can be used for manufacturing signboards, billboards and instrument panels.

## Description

### Field of the invention

The present invention relates to a light conducting plate and the use thereof and more particular to a light conducting product and a method for making the same.

### Background of the invention

Light conducting fiber was reported in 1950's and got on with practical application in 1960's. Light conducting fiber is comprised of a light conducting layer of high refrangibility and a light reflecting layer of low refrangibiligy coated thereon. When light enters into the fiber from one side, total reflection takes place in the interface between the light conducting layer and the light reflecting layer many times and light exits from the other side of the fiber. Because light conducting fiber has excellent light transmission performance and is able to conduct light in flexible state, it has been widely used for information transmission field.

For many years, research efforts have been devoted to opening up new fields of the application of light conducting fiber. Up to now, for the sake of limitations of its construction, no achievement has been made.

It is an object of the present invention to provide a light conducting plate which has a good light transmission performance and an ability of transmitting light multidirectionally.

It is another object of the present invention to provide a novel light conducting product which transmits light from a light source multidirectionally and release it at predetermined places to obtain expected display.

The other aspects of the present invention will be illustrated in the following description.

### Summary of the invention

A light conducting plate consists of a light conducting layer and light reflecting layers. The upper and lower surfaces of the light conducting layer are coated with the light reflecting layers.

According to the present invention, a light conducting product includes a light conducting layer and light reflecting layers coated on the upper and lower surfaces of said light conducting layer, wherein at least one of the two light reflecting layers is provided with a certain pattern so that a part of the light conducting layer is covered with the light reflecting layer.

### Brief description of the drawing

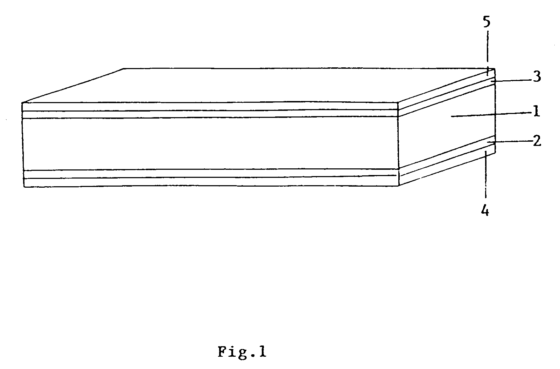

Fig.1 is a structural schematic diagram of a five-layer light conducting plate of the present invention.

### Detailed description of the invention

In order to make use of light transmission characteristic of light conducting material and extend the application of the same, the inventor has developed a light conducting plate having a characteristic of transmitting light multidirectionally. The light conducting plate comprised of a light conducting layer and light reflecting layers, wherein the light reflecting layers are coated on two opposite surfaces of the light conducting layer to form a three-layer plate.

Among light conducting materials for light conducting layer are transparent materials of high refrangibility. Commonly used materials are transparent polystyrene and organic glass with polystyrene being preferred. Among light reflecting materials for light reflecting layers are transparent polymers of low refrangibility which are compatible with light conducting materials for light conducting layer, such as polymethyl methacrylale ( organic glass) or metallic films which can produce total reflection, e.g. metallic Al, Ti-Au or Cr and the like. Thus, total reflection takes place in the interfaces between the light conducting layer and light reflecting layers to minimize light transmission loss.

The light conducting plate of the present invention may comprise an opaque layer (shielding layer) coated on the light reflecting layers. It can be coated either on one or both of the light reflecting layers which are coated on both surfaces of the light conducting layer. Preferably, an opaque layer is coated on two light reflecting layers to form a five-layer light conducting plate. The materials for opaque layer may be various resin paints, which can be used individually or as a mixture thereof.

Light-tight resin film(s) also can be used for opaque layer. For example, commonly used materials are light-tight ABS resin film, ABS resin/PC resin ( polycarbonate resin ) alloy film or PVC(polyvinylchloride) resin film. The materials used for opaque layers coated on both surfaces of the light conducting plate may be the same or different. The opaque layer may be used not only to shield the plate from light but also to protect the light reflecting layer. If desired, the opaque layer coated on one surface of light reflecting layers may comprise of two or more layers.

According to the present invention, the size and shape of said light conducting plate may be selected optionally as required. Generally, the thickness of said light conducting layer (central layer)and that of the light reflecting layers are about 3-15 mm and about 0.03-0.25 mm respectively. The thickness of two light reflecting layers may be the same or different. The thickness of opaque layers coated on two surfaces of light conducting layer ranges from 0.1 to 0.25 mm and may be the same or different.

In the light conducting plate of the invention, there is no light reflecting materials coated on both side ends or at least one of the side ends or a part of one side end. When a light source is provided at one side end of the light conducting plate, light will be transmitted into and through the light conducting layer multidirectionally. Because total reflection takes place in the interfaces between the light conducting layer and light reflecting layers, light is transmitted therein with a low loss.

According to the present invention, a composite light conducting plate can be prepared by laminating, for example, two or more three-layer light conducting plates or interposeing one or more opaque layers between two light reflecting layers laminated together so as to meet various needs. Similarly, opaque layer may be also coated on the outest surfaces of the composite light conducting plate for different uses.

The following methods may be used to prepare the light conducting plate of the present invention:

### 1. Coating:

Light reflecting materials which are compatible with the light conducting materials are coated on a plate used for light conducting layer to obtain the light conducting plate of the present invention. For example, a polystyrene plate is placed horizontally and one of the surfaces of the plate is sprayed ( or brushed) with ethanol-acetic acid solution of polymethyl methacrylate, and then the plate is dried at 55°C-65°C. In the same manner, the other surface of the plate is then coated with polymethyl methacrylate. The polystyene plate coated with polymethyl methacrylate on both surfaces is the three-layer light conducting plate of the invention. If required, light-tight resin paints can be sprayed ( or brushed) on the outer surfaces of polymethyl methacrypate layers to obtain a four or five-layer light conducting plate.

Preparation of ethanol-acetic acid solvent: 2-4 parts of acetic acid is added to 1 part of ethanol (V/V), then shake the mixture to homogeneous state to obtain the solvent.

Preparation of ethanol- acetic acid solution of polymethyl methacrylate: 6-15 L ethanol-acetic acid solvent above is added to 1Kg polymethyl methacrylate molding powder to form a mixture. The mixture is stirred up until the resin is completely dissolved to obtain the title solution.

### 2. Deposition:

Light reflecting materials such as metallic film are deposited on a plate for light conducting layer to obtain a light conducting plate of present invention. For example, after a polystyrene plate is placed in a vacuum deposition device, the two surfaces of the polystyrene plate are deposited with Al film, thereby a three-layer light conducting plate having is provided. If needed, light-tight resin paints can be sprayed( or brushed ) on the outer surface(s) of Al film to obtain a light conducting plate having four or five layers of the present invention.

### 3. Coextrusion:

Coextrusion is a process capable of laminating three or more layers, e.g. five layers by using a composite plate coextrusion machine to produce a composite plate having three or more layers of the present invention in a single operation. In illustration of a five-layer light conducting plate, the light conducting layer is of polystyrene while two light reflecting layers are of polymethyl methacrylate and two opaque layers are of ABS resin or ABS/PC resin alloy or PVC resin. A five-layer light conducting plate of the present invention can be produced by introducing the aforementioned materials into the composite plate coextrusion machine and being coextruded in a single operation.

The light conducting plate of the present invention finds wide utilities, especially for manufacturing signboards, billboards and instrument panels. The method comprises engraving characters (letters) or patterns on the light conducting plates manually or by a carving machine. During the process of engraving, a part of light reflecting layer and/or opaque layer on the light conducting plate is cut out according to the shape and size of characters or patterns, which, if needed, can be carried out on one or two surfaces of the light conducting plate. If a pattern is of a special shape, the preparation of signboards, billboards and instrument panels may be performed by hot-pressing in dies. In engraving operation, parts of the light conducting layer may be cut off, but the depth to be cut should be no more than 2/5 , preferably no more than 1/5 of the total thickness of the same. When a light source is provided at the side of the light conducting plate, the characters and patterns will emit eye-catching light. If fluorescent paints are coated on the parts cut off, colorful signboards, billboards and instrument panels may be prepared.

The light conducting plate of the present invention has superior light transmission characteristics and lower attenuation during light transmission, is capable to transmit light in flexible plate and can be easily prepared with a light weight and a low cost.

The light conducting plate of the present invention may be prepared manually or on a large scale simply with a low cost.

Signboards, billboards and instrument panels made from the light conducting plate of the present invention have many advantages: a high light signal, prominent headlines, high efficiency, economic power, good decoration, long duration, simplified construction, a light weight, small volume and the like. The total thickness of a double-faced billboard can be controlled ranging from 3-5 mm only.

A light conducting product comprises of a light conducting layer and light reflecting layers which are coated on both surfaces of said light conducting layer, wherein at least one light reflecting layer is coated on said light conducting layer as a specific pattern so that a part of said surface of said light conducting layer is covered. When a light source is provided at the side end of the light conducting layer, light will be transmitted multidirectionally therethrough and exit from the light conducting layer at a position where the light conducting layer is not coated by the light reflecting layer. Because the uncoated part has a special pattern, light will emit and show the same.

An opaque layer can be coated on the light reflecting layer of said light conducting product. As the light reflecting layer has a special pattern, the opaque layer coated thereon also has a corresponding pattern.

A light conducting product includes the light conducting plate of the present invention, wherein on at least one surface of said light conducting plate, a part of light reflecting layer or a part of opaque layer and light reflecting layer are carved and cut off according to a pattern so that said pattern of light conducting layer reveals itself If required, a pattern can be penetrated into the light conducting layer or a part of light conducting layer can be cut off according the pattern, but the depth to be cut should be no more than 2/5, preferably no more than 1/5 of the thickness of light conducting layer.

A display device including light source and the light conducting plate of the present invention, wherein light is provided from at least one side end of said light conducting plate to the light conducting plate, said light conducting plate comprises light conducting layer and light reflecting layers coated on two opposite surfaces of said light conducting layer, wherein the light conducting layer is covered partially by at least one of the light reflecting layers so that a special pattern may manifest itself on said surface of said light conducting layer.

Similarly, an opaque layercan be coated on the light reflecting layer. When the light reflecting layer has a special pattern, the opaque layer will show the same. Light from the light conducting layer will exit to show the pattern.

A display device including a light source and light conducting plate of the present invention, wherein light is provided from at least one side end of said light conducting plate to the light conducting layer and a part of light reflecting layer or a part of opaque layer and light reflecting layer on at least one surface of said light conducting layer are carved and cut off according to the shape or size of a pattern, thereby said pattern reveals itself on the light conducting layer. If it is required, a pattern can penetrated into the light conducting layer or a part of the light conducting layer is cut off according to the pattern, but the depth to be cut off is no more than 2/5 , preferably no more than 1/5 of the thickness of the light conducting layer. When light from a light source is provided to the light conducting layer, it is released through said pattern so that the said pattern is clearly discernible at night or in the dark.

### Example 1. Preparation of the light conducting plate of the present invention by coating.

A polystyrene plate (5mm thick) was cut to a rectanglar shape of 600 mm ×400 mm. Then the plate was placed horizontally on a shelf, sprayed with ethyl alcohol-acetic acid solution of polymethyl methacrylate and dried at 55°C - 65°C. Next it was turned over and sprayed with ethyl alcohol-acetic acid solution of polymethyl methacrylate in the aforementioned manner and dried to obtain a three-layer light conducting plate of the present invention. Ethyl alcohol-acetic acid solution of polymethyl methacrylate was prepared by adding 9L of ethyl alcohol-acetic acid solution into 1Kg molding powder of polymethyl methacrylate. The ethnol-acetic acid solution was formulated by adding three parts of ethyl alcohol to seven parts of acetic acid (v/v) and mixing resulting solution.

### Example 2. Preparation of the light conducting plate of present invention by deposition method

Polystyrene plate (10mm thick) was cut to a rectanglar shape of 600×400mm and placed in a vacuum aluminum deposition apparatus. Then, a 0.03 mm Al film is deposited on both surfaces of the polystyrene plate to obtain a three-layer light conducting plate. In order to protect Al-film from abrasion and scratch, a resin paint was coated on the two outer surfaces of the Al-film as a shielding and protecting layer, thereby a light conducting plate having five layers of the present invention was obtained.

### Example 3. Preparation of the light conducting plate of the present invention by coextrusion moulding

A five-layer light conducting plate of the present invention was prepared by coextrusion in a single operation through a composite plate coextrusion machine capable of laminating five layers. See Fig.1.

The process comprises the following steps:
Granular material of polystyrene was added into No.1 feed hopper of the composite plate coextrusion machine. The molten (softening) polystyrene was extruded from extruder No.1 into coextrusion die and passed through a gap for light conducting layer of the coextrusion die to form a light conducting layer (1).
Granular material of polymethyl methacrylate was added into No.2 and No.3 feed hoppers. The resulting molten (softening) polymethyl methacrylate was extruded from extruders No.2 and No.3 into coextrusion die and passed through two gaps for light reflecting layers so as to be formed on two surfaces of the light conducting layer (1) to obtain two light reflecting layers (2,3).
Granular material of light-tight ABS resin (or ABS/PC resin, PVC resin) was placed into No.4 and No.5 feed hoppers. The molten (softening) ABS resin was extruded from extruders No.4 and No.5 into coextrusion die and passed through two gaps for light protecting material so as to be formed on two outer surfaces of light reflecting layers (2,3) to obtain opaque layers (4,5).
Extruders No.1, 2, 3, 4, 5 were operated simultaneously. Three different starting materials were extruded into coextrusion die and then passed through different passages respectively to form a composite sheet. Then it is pressed by a three-roll calender roller, cooled, drawn, trimmed and cut to obtain a five-layer light conducting plate of the present invention.
If No.4, 4 feed hoppers and No.4, 5 extruders are not used, a three-layer light conducting plate of the present invention can be obtained.

### Example 4. Preparation of light conducting signboards or billboards with the light conducting plate of the present invention.

1. A three-layer light conducting plate with a 5 mm light conducting layer prepared by coating was cut into a rectanglar shape of 600mm×400mm. "Instant sticking" used as opaque layers was sticked on both surfaces of the light conducting plate. The "instant sticking" and reflecting layer were cut off by a carving machine to form an expected pattern. The cutting depth penetrated into light conducting layer was no more than 0.5mm. Light sources with lambshades were installed on two side ends of the light conducting plate to obtain a light conducting signboard or billboard. Only two 15w fluorescent lamps were needed to be installed on two sides of the board. Characters and patterns made by this way were very bright and eye-catching. Said signboard made by the present invention has a simple construction, a light weight and lower costs.
2. A five-layer light conducting plate prepared by coating was cut to 600mm×400mm. According to the shape or size of a pattern, the resin paint of the protective opaque layer and polymethyl methacrylate of the reflecting layer were cut out, but the depth penetrated into the layers was no more than 0.5mm. Two 15w fluorescent lamps were installed one two side ends of the light conducting plate. Characters and patterns engraved by this method were very bright and eye-catching. If fluorescent paints of different colors are coated on the parts carved, the signbilld of light conducting late would be colorful and very beautiful. Said light conducting signboard is convenient to produce and simple in construction with a light weight, a low cost and reduced power. It is superior to a lamp box.
3. The light conducting plate having five layers prepared by deposition method was used in the preparation of light conducting billboards in the same manner as the examples above. The similar result was obtained.

### Example 5. Preparation of instrument panel for cab of motorvehicle with the light conducting plate made by a coextrusion moulding method of the present invention.

A light conducting plate having a 3mm thick light conducting layer and a opaque layer of ABS resin was cut to a required shape. The required characters and patterns were cut out by a computer-based carving machine. The cutting reached light conducting layer. Then the plate was placed in a mold and formed into an instrument panel with a required shape by hot pressing. Fluorescent paint of different colors was coated on carved parts to obtain a light conducting instrument panel. Small illuminant were mounted on the sides of the panel to enable the panel to display clearly. Said motor-vehicle instrument panel is compact, simple, less power consuming, easy to produce with a low cost, a beautiful appearance and a long duration.

## Claims

1. A light conducting plate comprising a light conducting layer and light reflecting layers coated on two opposite surfaces of said light conducting layer, wherein said light reflecting layers are compatible with said light conducting layer so that when light is introduced from a side end of said light conducting layer, it is transmitted through said light conducting layer multidirectionally with a low loss.

2. A light conducting plate according to Claim 1, wherein said light conducting layer is made of transparent polystyrene material and said light reflecting layer is made of polymethyl methacrylate film.

3. A light conducting plate according to Claim 2, wherein said light conducting layer is made of transparent polystyrene material and said light reflecting layer is made of metallic Al film, Ti-gold or chromium.

4. A light conducting plate according to Claims 1 to 3 further comprises at least one opaque layer coated on the outer surface of at least one light reflecting layer.

5. A light conducting plate according to Claim 4, wherein said opaque layer is selected from the group consisting of light-tight ABS resin film, light-tight ABS resin/PC resin alloy film and light-tight PVC resin film.

6. Use of the light conducting plate according to Claims 1 to 5 for the preparation of signboard, billboard or instrument panels.

7. A method for the prepartion of the light conducting plate according to Claims 1 to 3, comprising coating the surfaces of light conducting layer with light reflecting layer by spray coating, brushing or vacuum deposition.

8. A method for the preparation of the light conducting plate according to Claims 4 or 5, comprising coating the outer surface of said light reflecting layer with said opaque layer by spray coating or brushing.

9. A method for the preparation of the light conducting plate according to Claims 1 to 5, wherein the light conducting plates are manufactured by coextrusion in a single operation.

10. A light conducting product, comprising a light conducting plate according to Claims 1 to 5 with a special pattern being engraved thereon.
